# EUROPEAN PATENT APPLICATION

(11) **EP 1 087 310 A1**
(43) Date of publication of application: **28.03.2001**
(21) Application number: 00909638.9
(22) Date of filing: 15.03.2000
(51) Int. Cl.: G06F 17/30, G06F 13/00, H04N 7/08, H04N 5/445, H04H 1/00

(54) **SENDING/RECEIVING DEVICE AND SENDING/RECEIVING METHOD**

(30) Priority: 19.03.1999 JP 7587099
(71) Applicant: Sony Corporation, Tokyo 141-0001 (JP); Information Broadcasting Laboratories, Inc., Taito-ku, Tokyo 111-0035 (JP)
(72) Inventor: NISHIO, Fumihiko, Sony Corporation, Tokyo 141-0001 (JP); GONNO, Yoshihisa, Sony Corporation, Tokyo 141-0001 (JP); HARAOKA, Kazuo, Sony Corporation, Tokyo 141-0001 (JP); YAMAGISHI, Yasuaki, Sony Corporation, Tokyo 141-0001 (JP); TAKABAYASHI, Kazuhiko, Sony Corporation, Tokyo 141-0001 (JP)
(74) Representative: Pratt, Richard Wilson
(86) International application number: JP0001560
(87) International publication number: WO0057301

(57) **Abstract**

Along with contents data, a meta information schema, meta information, and inference rules are individually received and stored. A meta information operating portion 310 searches or browses meta information stored in a meta information storing portion 307. The searched and/or browsed history is stored to a user profile storing portion 312. With inference rules, attributes that are not explicitly represented in meta information can be used. When an inference rule whose applied frequency is larger than a predetermined threshold value, a meta information / schema changing portion 308 changes a meta information schema and meta information so that they have an attribute obtained by the inference rule corresponding to the searched and/or browsed history. Thus, since inference rules are not always applied, the searching efficiency can be improved.

## Description

### Technical Field

The present invention relates to a transmitting apparatus, a receiving apparatus, a transmitting and receiving apparatus, a transmitting method, a receiving method, and a transmitting and receiving method that are used in the field of a technology for delivering video and audio data to an infinite number of subscribers and that allow delivered data to be effectively accessed.

### Related Art

Many techniques have been proposed as data delivering systems. For example, on the Internet, data is delivered using WWW (World Wide Web) corresponding to HTTP (Hyper Text Transfer Protocol). To retrieve desired data from a huge amount of a data collection of WWW (World Wide Web), the use of meta information is becoming common. The meta information represents information about each title of data. As an example of systems that selectively receive data corresponding to meta information from WWW, PICS (Platform for Internet Content Selection) and RDF (Resource Description Framework) have been proposed.

In a digital broadcast, meta information such as a program title and broadcast time data that are structural elements of EPG (Electronic Program Guide) is transmitted in the format of EIT (Event Information Table). Information of EPG is represented as a section type table or the like referred to as SI (Service Information). A receiving apparatus extracts relevant information from the table and displays the extracted information on its screen. With EPG, the user can select data as a program from successive broadcast data.

Although a digital broadcast is uni-directionally transmitted to a very large number of terminal apparatuses, a large amount of data can be simultaneously transmitted. Thus, it is advantageous to merge a digital broadcast and a network. In reality, meta information is added to contents data on the Internet or contents data of a digital broadcast. Since a receiving apparatus should effectively access contents data using such meta information, the receiving apparatus should effectively search required meta information. In addition, when meta information is added to contents data, the amount of transmission data increases. Thus, it is necessary to effectively add and transmit meta information.

### Disclosure of the Invention

Therefore, an object of the present invention is to provide a transmitting apparatus, a receiving apparatus, a transmitting and receiving apparatus, a transmitting method, a receiving method, and a transmitting and receiving method that allow the transmission efficiency of meta information of the transmitting apparatus or the searching efficiency of the receiving apparatus to be improved without an increase of the data amount of the meta information.

To accomplish the above-described problem, the invention of claim 1 is a transmitting apparatus for providing digital contents, comprising a meta information storing means for storing meta information about data that is transmitted, a meta information schema storing means for storing a meta information schema that defines the data structure of meta information about data that is transmitted, an inference rule storing means for storing an inference rule about the data structure of meta information about data that is transmitted, and a transmitting means for transmitting the meta information, the meta information schema, the inference rule, and contents data through a transmission path.

According to the invention of claim 1, since an inference rule is transmitted, the data amount of meta information to be transmitted can be reduced.

The invention of claim 2 is a transmitting apparatus for providing digital contents, comprising a meta information storing means for storing meta information about data that is transmitted, a meta information schema storing means for storing a meta information schema that defines the data structure of meta information about data that is transmitted, a transmitting means for transmitting the meta information, the meta information schema, and contents data through a transmission path, a communication controlling means for communicating with a receiving apparatus, and a changing means for changing the structure of the meta information schema that has been stored in the meta information schema storing means and the meta information that has been stored in the meta information storing means corresponding to data that has been received through the communication controlling means.

According to the invention of claim 2, the transmitting apparatus is informed of a meta information use history, for example, the applied frequency of a meta information schema on the receiving side. Thus, a meta information schema transmitted from the transmitting apparatus is changed. In other words, an attribute whose applied frequency is low is deleted the transmission thereof becomes unnecessary. Thus, the data amount of a meta information schema to be transmitted can be reduced.

The invention of claim 3 is a transmitting apparatus for providing digital contents, comprising a meta information storing means for storing meta information about data that is transmitted, a meta information schema storing means for storing a meta information schema that defines the data structure of meta information about data that is transmitted, an inference rule storing means for storing an inference rule about the data structure of meta information about data that is transmitted, a transmitting means for transmitting the meta information, the inference rule, and contents data through a transmission path, a communication controlling means for communicating with a receiving apparatus, and a changing means for changing the inference rule that has been stored in the inference rule storing means corresponding to data that has been received through the communication controlling means.

According to the invention of claim 3, the transmitting apparatus is informed of a meta information use history, for example, the applied frequency of an inference rule on the receiving side. Thus, an inference rule transmitted from the transmitting apparatus is changed. In other words, an inference rule whose applied frequency is low is deleted or the transmission thereof becomes unnecessary. Thus, the data amount of an inference rule to be transmitted can be reduced.

The invention of claim 6 is a receiving apparatus for receiving data for providing digital contents, comprising a receiving means for receiving at least meta information and contents data through a transmission path, a meta information schema storing means for storing a meta information schema, a profile operating means for operating a selection criterion for selecting meta information corresponding to the meta information schema, a user profile storing means for storing a user profile generated by the profile operating means, a meta information filtering means for selecting and receiving meta information corresponding to the user profile, a meta information storing means for storing meta information that has been selected and received, a meta information operating means for searching and/or browsing meta information, an inference rule storing means for storing an inference rule about the data structure of meta information, a data storing means for receiving and storing data of contents represented by the meta information that has been selected, and a data operating portion for operating data that has been stored in the data storing means.

According to the invention of claim 6, with an inference rule, the data amount of meta information to be transmitted can be reduced.

The invention of claim 7 is a receiving apparatus for receiving data for providing digital contents data, comprising a receiving means for receiving at least meta information and contents data through a transmission path, a meta information schema storing means for storing a meta information schema that defines the data structure of meta information, a profile operating means for operating a selection criterion for selecting meta information corresponding to the meta information schema, a user profile storing means for storing a user profile generated by the profile operating means, a meta information filtering means for selecting and receiving meta information corresponding to the user profile, a meta information storing means for storing meta information that has been selected and received, a meta information operating means for searching and/or browsing meta information, an inference rule storing means for storing an inference rule about the data structure of meta information, a changing means for changing the structure of the meta information schema that has been stored in the meta information schema storing means and the meta information that has been stored in the meta information storing means corresponding to the user profile that has been stored in the user profile storing means and to the inference rule that has been stored in the inference rule storing means, a data storing means for receiving and storing data of contents represented by the selected meta information, and a data operating portion for operating data that has been stored in the data storing means.

According to the invention of claim 7, an inference rule is used. In addition, when the use frequency of an inference rule becomes high or corresponding to a user's setup, the structure of a meta information schema and meta information are changed so that a new attribute is defined corresponding to the inference rule. Thus, the searching efficiency can be improved.

The invention of claim 10 is a transmitting and receiving apparatus having a transmitting apparatus for providing digital contents and a receiving apparatus for receiving digital contents, wherein the transmitting apparatus comprises a meta information storing means for storing meta information about data that is transmitted, a meta information schema storing means for storing a meta information schema that defines the data structure of meta information about data that is transmitted, an inference rule storing means for storing an inference rule about the data structure of meta information about data that is transmitted, and a transmitting means for transmitting the meta information, the meta information schema, the inference rule, and contents data through a transmission path, and wherein the receiving apparatus comprises a receiving means for receiving the meta information, the meta information schema, the inference rule, and contents data through a transmission path, a meta information schema storing means for storing the received meta information schema, a profile operating means for operating a selection criterion for selecting meta information corresponding to the meta information schema, a user profile storing means for storing a user profile generated by the profile operating means, a meta information filtering means for selecting and receiving meta information corresponding to the user profile, a meta information storing means for storing the meta information that has been selected and received, a meta information operating means for searching and/or browsing meta information, an inference rule storing means for storing an inference rule that has been received, a data storing means for receiving and storing data of contents that is represented by the selected meta information, and a data operating portion for operating data that has been stored in the data storing means.

According to the invention of claim 10, with an inference rule, the data amount of meta information to be transmitted can be reduced.

The invention of claim 11 is a transmitting and receiving apparatus having a transmitting apparatus for providing digital contents and a receiving apparatus for receiving digital contents, wherein the transmitting apparatus comprises a meta information storing means for storing meta information about data that is transmitted, a meta information schema storing means for storing a meta information schema that defines the data structure of meta information about data that is transmitted, a transmitting means for transmitting the meta information, the meta information schema, and contents data through a transmission path, a communication controlling means for communicating with the receiving apparatus, and a changing means for changing the structure of the meta information schema that has been stored in the meta information storing means and the meta information that has been stored in the meta information storing means corresponding to data that has been received through the communication controlling means, and wherein the receiving apparatus comprises a receiving means for receiving the meta information, the meta information schema, and contents data through a transmission path, a meta information schema storing means for storing the meta information schema that has been received, a profile operating means for operating a selection criterion for selecting meta information corresponding to the meta information schema, a user profile storing means for storing a user profile generated by the profile operating means, a meta information filtering means for selecting and receiving meta information corresponding to the user profile, a meta information storing means for storing meta information that has been selected and received, a meta information operating means for searching and/or browsing meta information, a data storing means for receiving and storing data of contents represented by the meta information that has been selected, a data operating portion for operating data that has been stored in the data storing means, and a communication controlling means for transmitting data to the transmitting apparatus.

According to the invention of claim 11, the transmitting apparatus is informed of a meta information use history, for example, the applied frequency of a meta information schema on the receiving side. Thus, a meta information schema transmitted from the transmitting apparatus is changed. In other words, an attribute whose applied frequency is low is deleted or the transmission thereof becomes unnecessary. Thus, the data amount of a meta information schema to be transmitted can be reduced.

The invention of claim 12 is a transmitting and receiving apparatus having a transmitting apparatus for providing digital contents and a receiving apparatus for receiving digital contents, wherein the transmitting apparatus comprises a meta information storing means for storing meta information about data that is transmitted, a meta information storing means for storing a meta information schema that defines the data structure of meta information about data that is transmitted, an inference rule storing means for storing an inference rule about the data structure of meta information about data that is transmitted, a transmitting means for transmitting the meta information, the meta information schema, the inference rule, and contents data through a transmission path, a communication controlling means for communicating with the receiving apparatus, and a changing means for changing the inference rule that has been stored in the inference rule storing means corresponding to data that has been received through the communication controlling means, and wherein the receiving apparatus comprises a receiving means for receiving the meta information, the meta information schema, the inference rule, and contents data through a transmission path, a meta information schema storing means for storing the meta information schema that has been received, a profile operating means for operating a selection criterion for selecting meta information corresponding to the meta information schema, a user profile storing means for storing a user profile generated by the profile operating means, a meta information filtering means for selecting and receiving meta information corresponding to the user profile, a meta information storing means for storing the meta information that has been selected and received, a meta information operating means for searching and/or browsing meta information, an inference rule storing means for storing the inference rule that has been received, a data storing means for receiving and storing data of contents represented by the meta information that has been selected, a data operating portion for operating data that has been stored in the data storing means, and a communication controlling means for transmitting data to the transmitting apparatus.

According to the invention of claim 12, the transmitting apparatus is informed of a meta information use history, for example, the applied frequency of an inference rule on the receiving side. Thus, an inference rule transmitted from the transmitting apparatus is changed. In other words, an inference rule whose applied frequency is low is deleted or the transmission thereof becomes unnecessary. Thus, the data amount of an inference rule to be transmitted can be reduced.

The invention of claim 13 is a transmitting and receiving apparatus having a transmitting apparatus for providing digital contents and a receiving apparatus for receiving digital contents, wherein the transmitting apparatus comprises a meta information storing means for storing meta information about data that is transmitted, a meta information schema storing means for storing a meta information schema that defines the data structure of meta information about data that is transmitted, an inference rule storing means for storing an inference rule about the data structure of meta information about data that is transmitted, and a transmitting means for transmitting the meta information, the meta information schema, the inference rule, and contents data through a transmission path, and wherein the receiving apparatus comprises a receiving means for receiving the meta information, the meta information schema, the inference rule, and contents data through a transmission path, a meta information schema storing means for storing the meta information schema that has been received, a profile operating means for operating a selection criterion for selecting meta information corresponding to the meta information schema, a user profile storing means for storing a user profile generated by the profile operating means, a meta information filtering means for selecting and receiving meta information corresponding to the user profile, a meta information storing means for storing the meta information that has been selected and received, a meta information operating means for searching and/or browsing meta information, an inference rule storing means for storing an inference rule, a changing means for changing the structure of the meta information schema that has been stored in the meta information schema storing means and the meta information that has been stored in the meta information storing means corresponding to the user profile that has been stored in the user profile storing means and to the inference rule that has been stored in the inference rule storing means, a data storing means for receiving and storing data of contents represented by the meta information that has been selected, and a data operating portion for operating data stored in the data storing means.

According to the invention of claim 13, an inference rule is used. In addition, when the use frequency of the inference rule becomes high or corresponding to a user's setup, the structure of a meta information schema and meta information are changed so that a new attribute is defined corresponding to the inference rule. Thus, the searching efficiency can be improved.

The invention of claim 14 is a transmitting method for providing digital contents, comprising the step of when meta information about data that is transmitted, a meta information schema that defines the data structure of the meta information, and contents data are transmitted through a transmission path, changing the structure of the meta information schema and the meta information corresponding to data that has been received from a receiving apparatus and transmitting the changed data.

According to the invention of claim 14, the transmitting apparatus is informed of a meta information use history, for example, the applied frequency of a meta information schema on the receiving side. Thus, a meta information schema transmitted from the transmitting apparatus is changed. In other words, an attribute whose applied frequency is low is deleted or the transmission thereof becomes unnecessary. Thus, the data amount of a meta information schema to be transmitted can be reduced.

The invention of claim 15 is a transmitting method for providing digital contents, comprising the step of when meta information about data that is transmitted, a meta information schema that defines the data structure of the meta information, an inference rule about the data structure of the meta information, and contents data are transmitted through a transmission path, changing the inference rule corresponding to data that has been received from a receiving apparatus and transmitting the changed data.

According to the invention of claim 15, the transmitting apparatus is informed of a meta information use history, for example, the applied frequency of an inference rule on the receiving side. Thus, an inference rule transmitted from the transmitting apparatus is changed. In other words, an inference rule whose applied frequency is low is deleted or the transmission thereof becomes unnecessary. Thus, the data amount of an inference rule to be transmitted can be reduced.

The invention of claim 17 is a receiving method for receiving data for providing digital contents, comprising the steps of storing a meta information schema that defines the data structure of meta information, storing meta information that has been selected and received, searching and/or browsing meta information, and changing the structure of the meta information schema and the meta information that has been stored corresponding to a user profile and an inference rule.

According to the invention of claim 17, an inference rule is used. In addition, when the use frequency of the inference rule becomes high or corresponding to a user's setup, the structure of a meta information schema and meta information are changed so that a new attribute is defined corresponding to the inference rule. Thus, the searching efficiency can be improved.

The invention of claim 18 is a transmitting and receiving method for providing digital contents and receiving digital contents, comprising the steps of transmitting meta information about data that is transmitted, a meta information schema that defines the data structure of the meta information, and contents data through a transmission path, changing the structure of the meta information schema that is transmitted and the meta information corresponding to data that has been received from a receiving apparatus, storing a meta information schema that defines the data structure of the meta information that has been received on a receiving side, storing the meta information that has been selected and received, and searching and/or browsing the meta information.

According to the invention of claim 18, the transmitting apparatus is informed of a meta information use history, for example, the applied frequency of a meta information schema on the receiving side. Thus, a meta information schema transmitted from the transmitting apparatus is changed. In other words, a meta information schema whose applied frequency is low is deleted or the transmission thereof becomes unnecessary. Thus, the data amount of a meta information schema to be transmitted can be reduced.

The invention of claim 19 is a transmitting and receiving method for providing digital contents and receiving digital contents, comprising the steps of transmitting meta information about data that is transmitted, a meta information schema that defines the data structure of the meta information, an inference rule, and contents data through a transmission path, changing the inference rule that is transmitted corresponding to data that has been received from a receiving apparatus, storing a meta information schema that defines the data structure of the meta information that has been received on a receiving side, storing the meta information that has been selected and received, and searching and/or browsing the meta information.

According to the invention of claim 19, the transmitting apparatus is informed of a meta information use history, for example, the applied frequency of an inference rule on the receiving side. Thus, an inference rule transmitted from the transmitting apparatus is changed. In other words, an inference rule whose applied frequency is low is deleted or the transmission thereof becomes unnecessary. Thus, the data amount of an inference rule to be transmitted can be reduced.

The invention of claim 20 is a transmitting and receiving method for providing digital contents and receiving digital contents, comprising the steps of transmitting meta information about data that is transmitted, a meta information schema that defines the data structure of the meta information, an inference rule about the data structure of the meta information, and contents data through a transmission path, storing the meta information schema that defines the data structure of the meta information that has been received on a receiving side, storing the meta information that has been selected and received, and changing the structure of the meta information schema and the meta information that has been stored corresponding to a user profile and the inference rule.

According to the invention of claim 20, an inference rule is used. In addition, when the use frequency of the inference rule becomes high or corresponding to a user's setup, the structure of a meta information schema and meta information are changed so that a new attribute is defined corresponding to the inference rule. Thus, the searching efficiency can be improved.

### Brief Description of Drawings

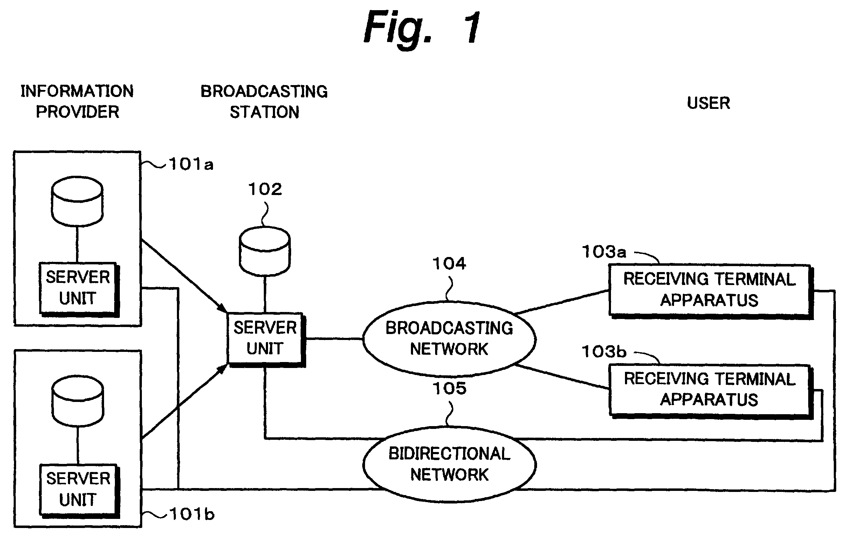

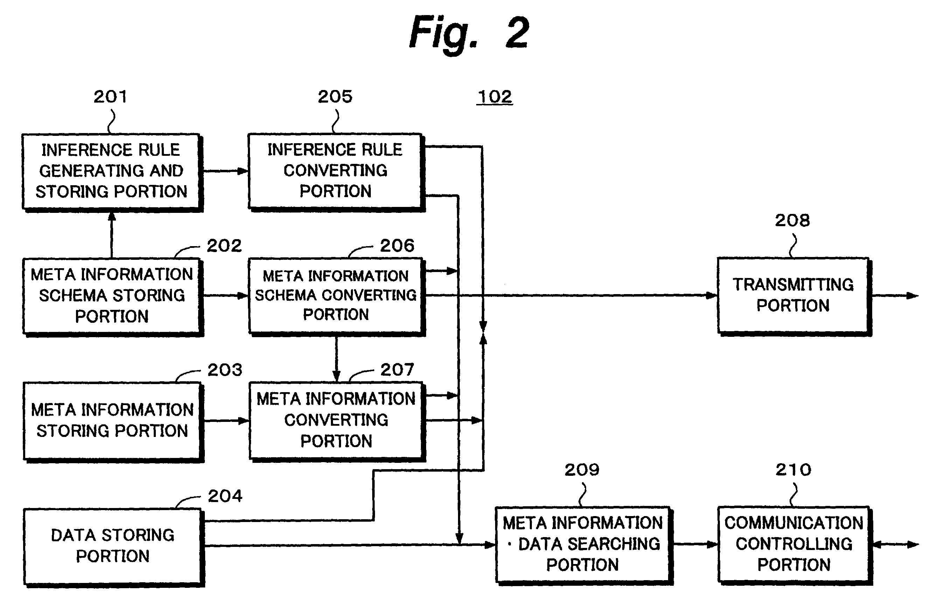

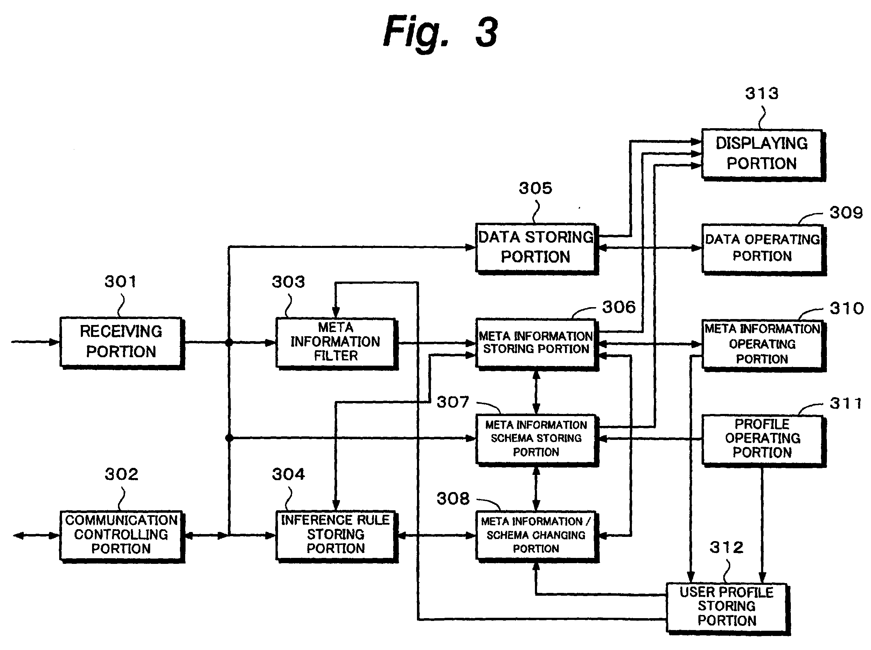

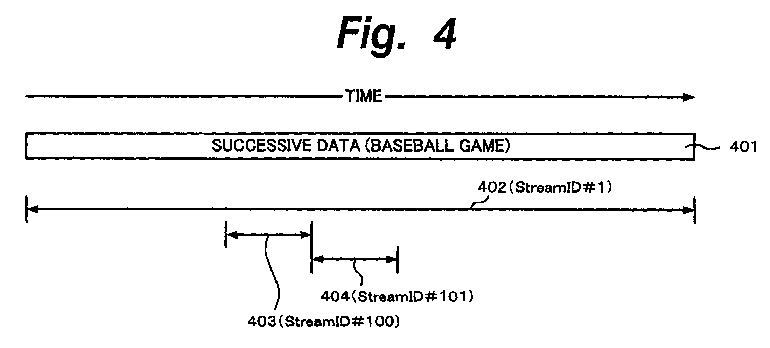

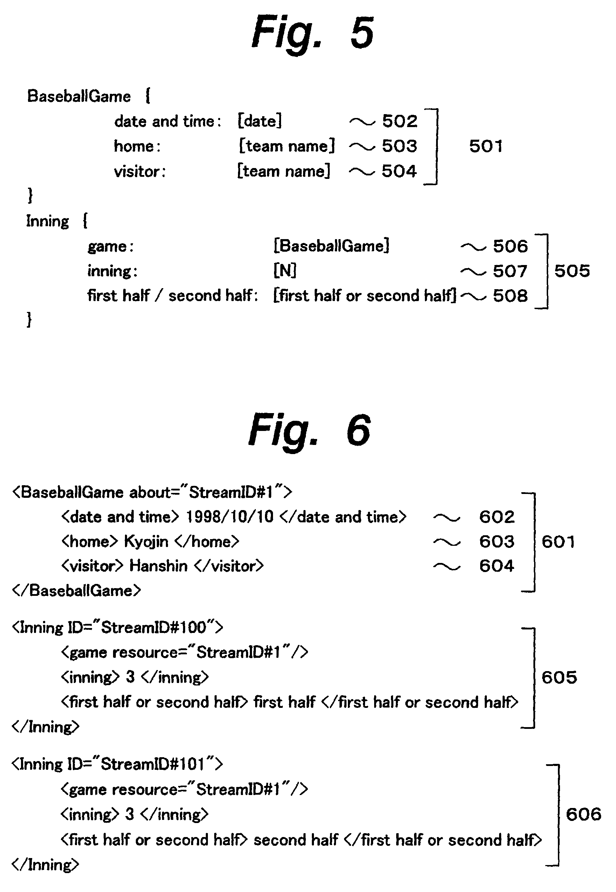

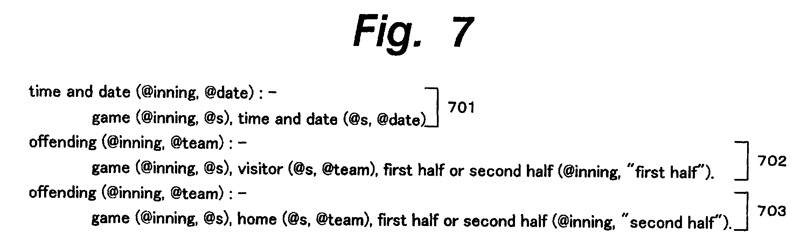

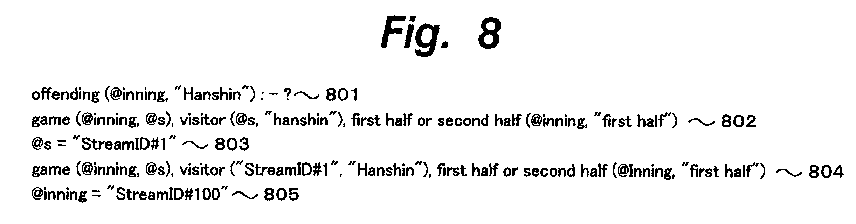

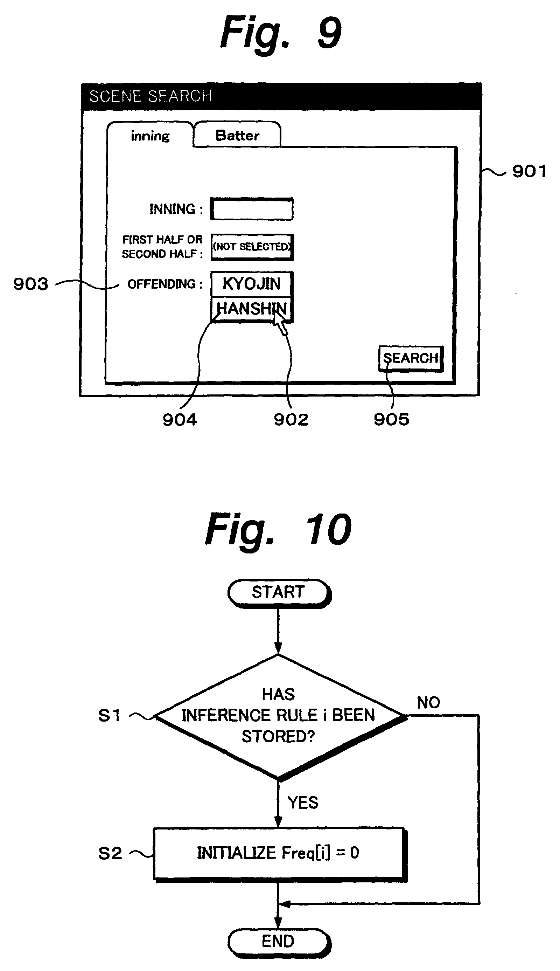

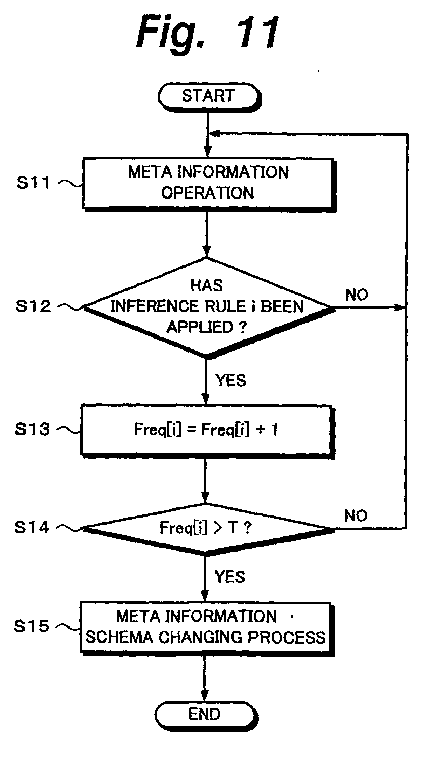

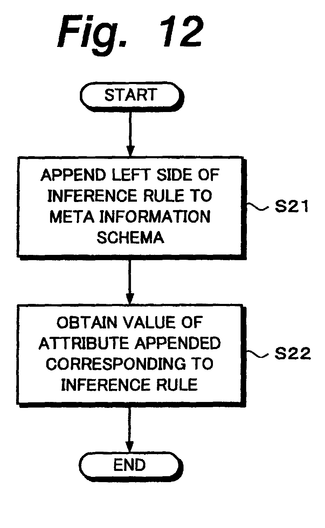

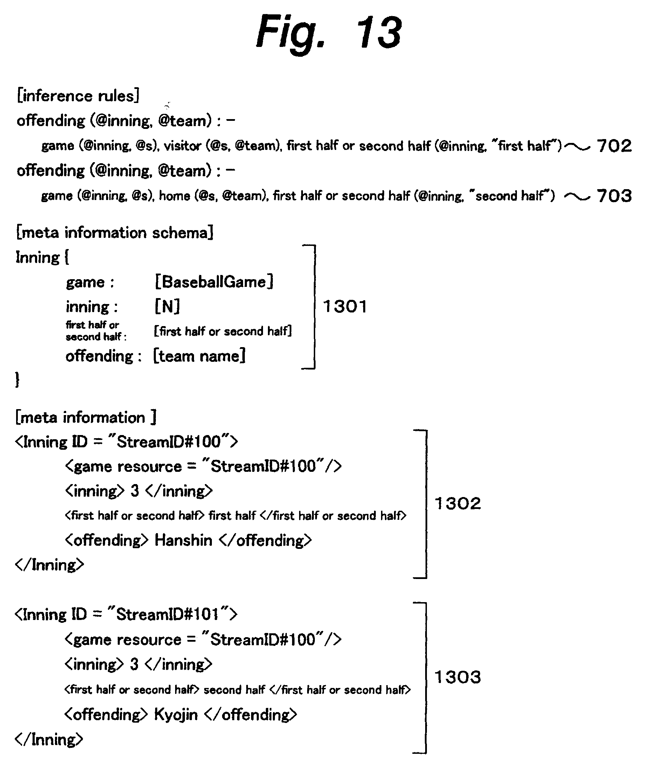

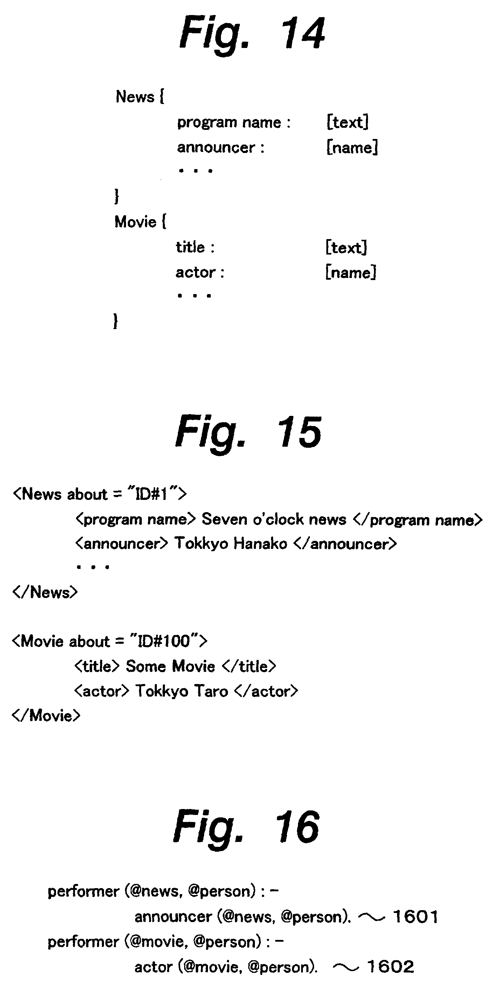

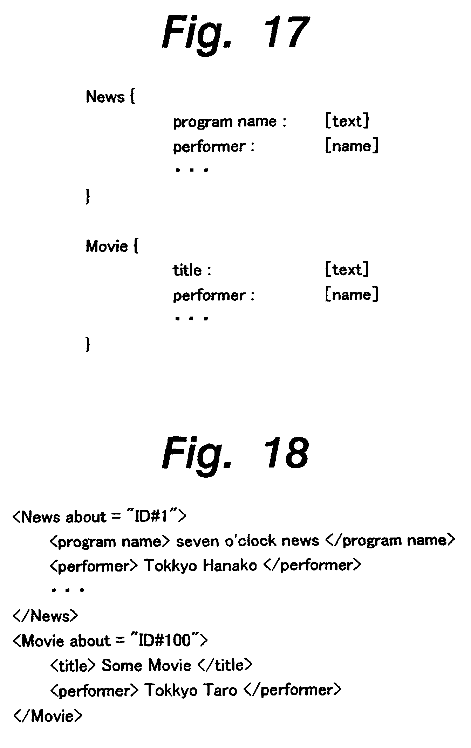

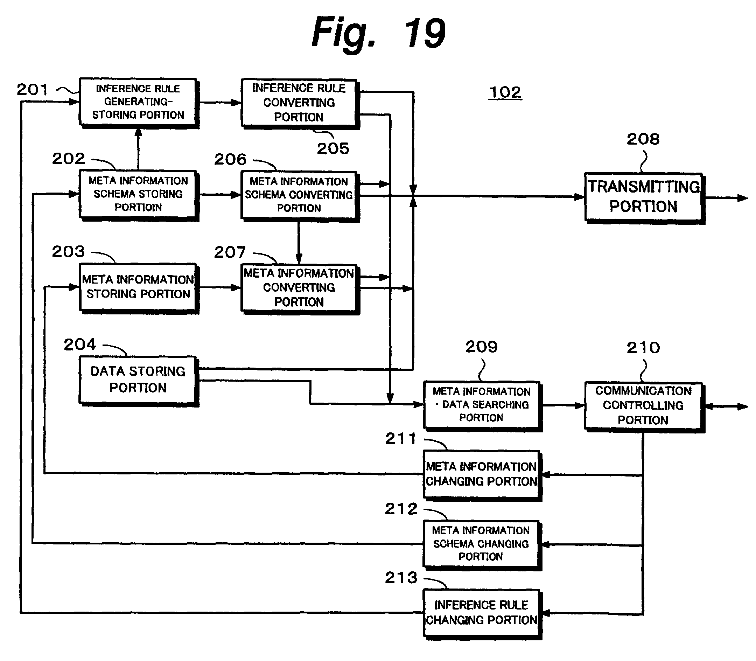

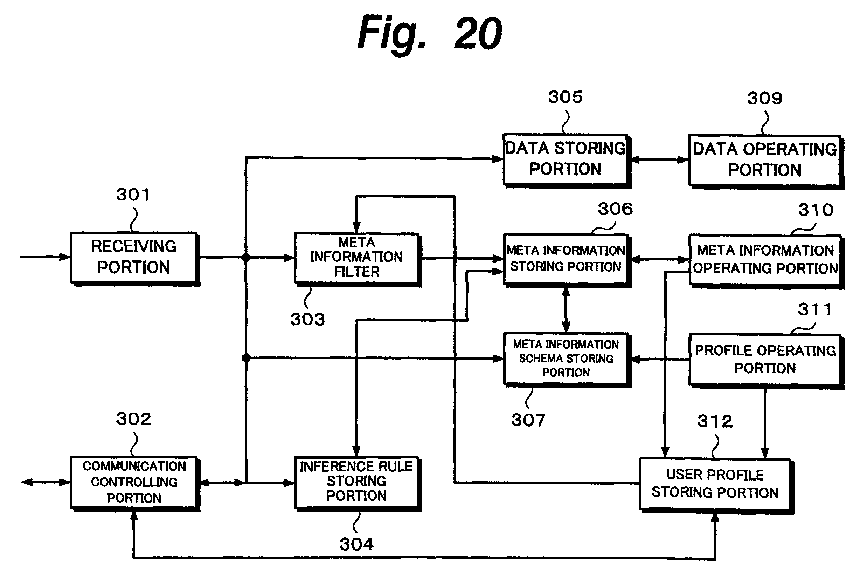

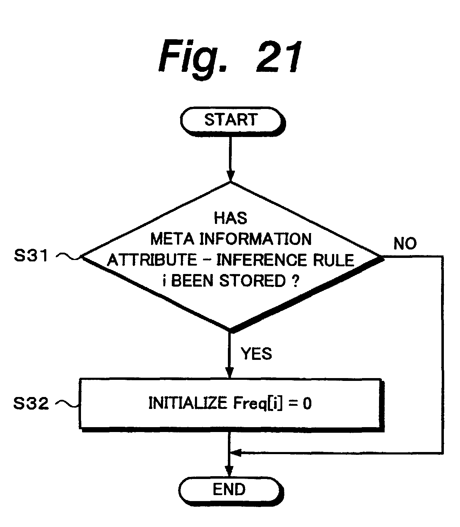

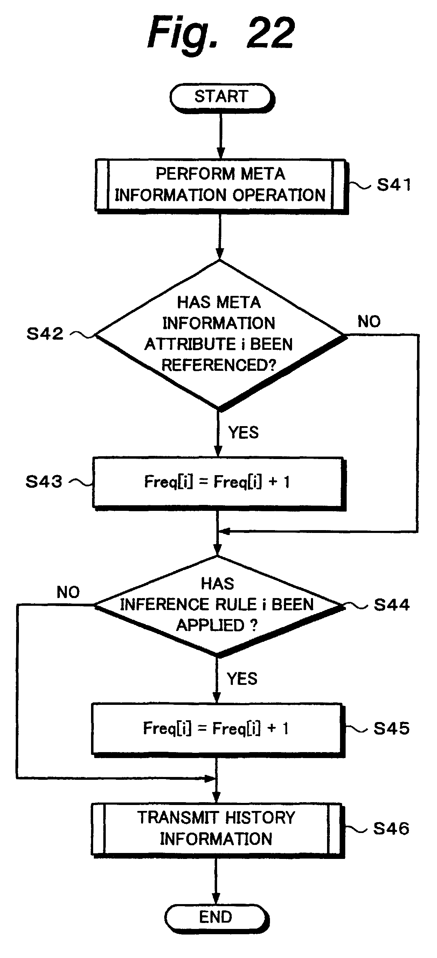

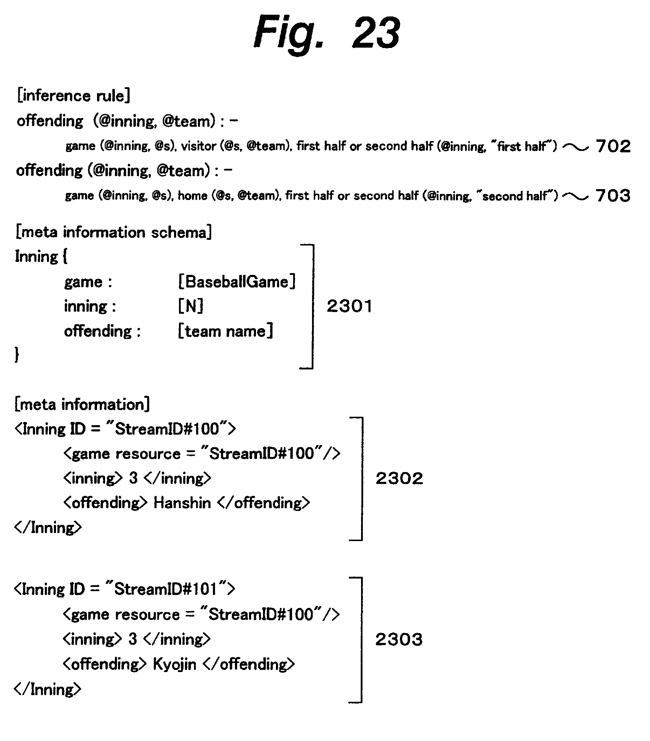

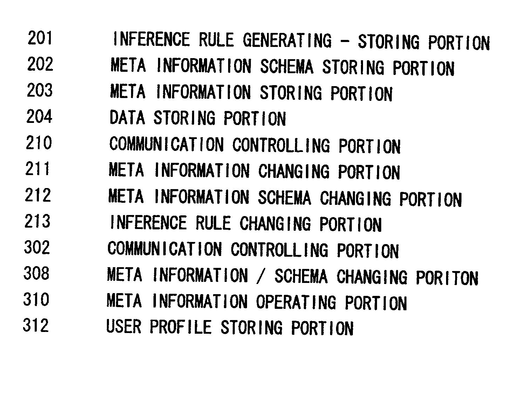

Fig. 1 is a block diagram showing a communication system according to the present invention; Fig. 2 is a block diagram showing an example of a broadcasting station according to an embodiment of the present invention; Fig. 3 is a block diagram showing an example of a receiving terminal apparatus according to the embodiment of the present invention; Fig. 4 is a schematic diagram for explaining a stream according to the embodiment of the present invention; Fig. 5 is a schematic diagram showing an example of a meta information schema according to the embodiment of the present invention; Fig. 6 is a schematic diagram showing an example of meta information according to the embodiment of the present invention; Fig. 7 is a schematic diagram showing an example of inference rules according to the embodiment of the present invention; Fig. 8 is a schematic diagram showing an example of a meta information operation using inference rules according to the embodiment of the present invention; Fig. 9 is a schematic diagram showing an example of a search input screen according to the embodiment of the present invention; Fig. 10 is a flow chart for explaining a process according to the embodiment of the present invention; Fig. 11 is a flow chart for explaining a process according to the embodiment of the present invention; Fig. 12 is a flow chart for explaining a process according to the embodiment of the present invention; Fig. 13 is a schematic diagram showing an example of a meta information changing process according to the embodiment of the present invention; Fig. 14 is a schematic diagram showing another example of a meta information schema according to the embodiment of the present invention; Fig. 15 is a schematic diagram showing another example of meta information according to the embodiment of the present invention; Fig. 16 is a schematic diagram showing another example of inference rules according to the embodiment of the present invention; Fig. 17 is a schematic diagram showing an example of a meta information schema that has been changed according to the embodiment of the present invention; Fig. 18 is a schematic diagram showing an example of meta information that has been changed according to the embodiment of the present invention; Fig. 19 is a block diagram showing an example of a broadcasting station according to another embodiment of the present invention; Fig. 20 is a block diagram showing an example of a receiving terminal apparatus according to the other embodiment of the present invention; Fig. 21 is a flow chart for explaining a process according to the other embodiment of the present invention; Fig. 22 is a flow chart for explaining a process according to the other embodiment of the present invention; and Fig. 23 is a schematic diagram for explaining an example of a meta information changing process according to the other embodiment of the present invention.

### Best Modes for Carrying out the Invention

Next, an embodiment of the present invention will be described. Fig. 1 shows an example of the structure of a digital contents delivering system according to the present invention. Information providers 101a and 101b each have a database that stores contents data, a meta information schema that defines the structure of meta information about the contents data, and meta information about each title of the contents data. An example of contents data is a WWW page. The information providers 101a and 101b are connected to a broadcasting station 102 and receiving terminal apparatuses 103a and 103b through a bidirectional network 105. The information providers 101a and 101b can deliver contents data, a meta information schema, and meta information to the receiving terminal apparatuses 103a and 103b through the bidirectional network 105. Likewise, the broadcasting station 102 has a database that stores contents data, a meta information schema that defines the structure of meta information about the contents data, and meta information of each title of the contents data. An example of the contents data is a program that is broadcast. The broadcasting station 102 is connected to the receiving terminal apparatuses 103a and 103b through a broadcasting network 104. The broadcasting station 102 broadcast contents data, a meta information schema, and meta information to the receiving terminal apparatuses 103a and 103b through the broadcasting network 104. In addition, the broadcasting station 102 can receive contents data, a meta information schema, and meta information from the information providers 101a and 101b through the bidirectional network and then broadcast them to the receiving terminal apparatuses 103a and 103b through the broadcasting network 104.

Fig. 2 shows an example of the structure of the broadcasting station 102. A data storing portion 204 stores contents data that is broadcast to the receiving terminal apparatuses 103a and 103b. The data storing portion 204 may temporarily store contents data provided by the information providers 101a and 101b. When contents data that is created is delivered without a delay as with a live program, the data storing portion 204 may be a cache that temporarily stores contents data that is monitored.

A meta information schema storing portion 202 stores a meta information schema that defines the structure of meta information about contents data stored in the data storing portion 204. The meta information is information that is added to contents data and broadcast to each receiving terminal apparatus. When contents data is a television program, meta information for example "program title", "program genre", and "parental guide" is added to the contents data. When contents data is a data broadcast, meta information for example "program name", "program genre", and "applicable OS type" is added to the contents data.

A meta information schema defines the structure of meta information added to contents data. There are a plurality of meta information schemas because the structure of meta information added to contents data varies corresponding thereto and time after time. The plurality of meta information schemas are identified with a meta information schema identifier. In addition, when necessary, a meta information schema, which represents the structure of meta information, may be transmitted to each receiving terminal apparatus through the bidirectional network or the broadcasting network before meta information is transmitted so that the meta information schema can be updated.

A meta information storing portion 203 stores meta information about contents data stored in the data storing portion 204 corresponding to the structure of the meta information schema stored in the meta information schema storing portion 202. For example, as meta information about a particular program, "program title: seven o'clock news", "program genre: news", and "broadcast time: 7:00 to 7:30" are added. An identifier of a meta information schema of the meta information is also added to the contents data.

An inference rule generating and storing portion 201 generates an inference rule corresponding to the structure of a meta information schema. With an inference rule, when meta information is searched and/or browsed, data that is not represented as an attribute value of meta information can be processed. An inference rule converting portion 205 converts the format of a generated inference rule into a predetermined transmission format. Various types of transmission formats may be used. In this example, the MPEG system session format is used.

A meta information schema converting portion 206 converts the format of a meta information schema stored in the meta information schema storing portion 202 into a predetermined transmission format. The descriptive format of a schema stored in the meta information schema storing portion 202 may vary for each title of contents data or each information provider. However, the meta information schema converting portion 206 converts the format of a meta information schema into a predetermined transmission format. As the transmission format, various types may be used. For example, data can be represented in the MPEG system section format.

A meta information converting portion 207 converts the format of meta information stored in the meta information storing portion 203 into a predetermined transmission format. The descriptive format of meta information may vary for each title of contents data or each information provider. As the transmission format, various types may be used. As an example, data may be represented in the MPEG system section format.

A transmitting portion 208 multiplexes an inference rule, a meta information schema, meta information that have been converted in the transmission format by the inference rule converting portion 205, the meta information schema converting portion 206, and the meta information converting portion 207 with contents data stored in the data storing portion 204. The transmitting portion 208 transmits the multiplexed data to the broadcasting network 104. The broadcasting network 104 is for example a line corresponding to the MPEG-2 system or the IP multi-cast.

A communication controlling portion 210 is connected to the bidirectional network 105. The communication controlling portion 210 receives requests for an inference rule, a meta information schema, meta information, and contents data from the receiving terminal apparatuses 103a and 103b. The communication controlling portion 210 obtains the inference rule, the meta information schema, the meta information, and the contents data corresponding to the requests from a predetermined portion and transmits them to the receiving terminal apparatuses 103a and 103b. The bidirectional network 105 is for example a line corresponding to IP (Internet Protocol), ATM (Asynchronous Transfer Mode), or the like. The structure of each of the information providers 101a and 101b is the same as the structure of the broadcasting station 102 except that the former does not have a transmitting portion that transmits data to the broadcasting network.

Fig. 3 shows an example of the structure of each of the receiving terminal apparatuses 103a and 103b. A receiving portion 301 receives an inference rule, a meta information schema, meta information, and contents data that are transmitted through the broadcasting network 104.

The received inference rule is stored in an inference rule storing portion 304. The received meta information schema is stored in a meta information schema storing portion 307. In addition, the meta information schema stored in the meta information schema storing portion 307 is occasionally changed by a meta information / schema changing portion 308.

The user of each receiving terminal apparatus references a meta information schema stored in the meta information schema storing portion 307 through a profile operating portion 311. A profile input screen corresponding to the meta information schema is displayed on a displaying portion 313 or another displaying portion. The user inputs his or her desired profile with the profile operating portion 311. As a result, user's profile information is generated. The generated profile information is stored in a user profile storing portion 312.

The received meta information is supplied to a meta information filter 303. The meta information filter 303 selects meta information that satisfies conditions of the selected user profile information stored in the user profile storing portion 312. The selected meta information is stored to a meta information storing portion 306. The meta information stored in the meta information storing portion 306 is occasionally changed by the meta information / schema changing portion 308.

A searching operation, a browsing operation, and so forth are performed for meta information stored in the meta information storing portion 306 through a meta information operating portion 310. A meta information input screen for searching meta information and searched meta information are displayed on the displaying portion 313 or another displaying portion. The searched meta information history and/or browsed meta information history is stored in the user profile storing portion 312. The searched meta information history and/or browsed meta information history affects the change processing method of the meta information / schema changing portion 308.

Corresponding to meta information stored in the meta information storing portion 306, contents data corresponding to the meta information is received by the receiving portion 301 and stored to a data storing portion 305. Contents data is displayed on the displaying portion 313 corresponding to a request that is received from a data operating portion 309. An inference rule, a meta information schema, meta information, and contents data may be requested and received by a communication controlling portion 302 through the bidirectional network 105.

As with the case that a meta information schema and an inference rule are pre-stored in a memory such as a non-volatile memory of a receiving apparatus, when it can be assumed that they are pre-stored in the receiving apparatus, it is not necessary to transmit a meta information schema and an inference rule, but meta information and contents data.

Next, the embodiment of the present invention will be further described. Fig. 4 shows an example of contents data, a meta information schema, meta information, and an inference rule that are delivered by for example a digital broadcast. In Fig. 4, as an example, contents data 401 as a program (a baseball game of Kyojin vs. Hanshin) that chronologically succeeds is shown. An identifier StreamID#1 is assigned to the entire program (hereinafter referred to as baseball game segment) 402. Identifiers StreamID#100 and StreamID#101 are assigned to part of the contents data, for example, the first half and the second half of one inning of the baseball game (hereinafter, one inning is referred to as inning segment).

In addition to the above-described identifier StreamID, any portion of successive data can be identified with parameters that are data composed of start time and duration (not shown). These time data is defined in an MPEG-2 stream.

Fig. 5 shows a meta information schema that defines a data structure representing a baseball game. In Fig. 5, reference numeral 501 represents the data structure of a baseball game segment as a whole. The baseball segment has attributes that are an attribute "date and time of game" 502, an attribute "team name of home team" 503, and an attribute "team name of visitor team" 504. In Fig. 5, reference numeral 505 represents the data structure of each inning segment of the game. Each inning segment has attributes that are an attribute "information representing game" 506, an attribute "inning number" 507, and an attribute "distinguishment of first half or second half" 508. In at least one service, the data structure defined with the meta information schema shown in Fig. 5 is data common in all the description of a baseball game.

Fig. 6 shows an example of meta information. The meta information is a description of information about a particular baseball game. The description of meta information corresponds to a data structure defined by a meta information schema. In Fig. 6, meta information 601, 605, and 606 corresponding to the baseball game segment 402 (StreamID#1), the inning segment 403 (StreamID#100), and the inning segment 404 (StreamID#101) are shown, respectively. The meta information 601 is a description of meta information of the baseball game segment 402 of "baseball game of Kyojin vs. Hanshin on October 10, 1998". Corresponding to the data structure of the meta information schema 501, the attribute "date and time of game" 502, the attribute "team name of home team" 503, the attribute "team name of visitor team" 504, and their attribute values 602, 603, and 604 are described.

Likewise, meta information 605 and 606 of the inning segment 403 (StreamID#100) and the inning segment 404 (StreamID#101) are described as shown in Fig. 6. In the example shown in Fig. 6, the home team is Kyojin, whereas the visitor team is Hanshin. StreamID#100 is the first half of the third inning, whereas StreamID#101 is the second half of the third inning.

Fig. 7 shows inference rules. An inference rule defines a rule for which an attribute value is newly obtained from the relation between segments. In Fig. 7, reference numeral 701 is a rule for which an attribute value of the attribute "date and time of game" of the inning segment is obtained. The attribute "date and time" of the inning segment defines an inference rule 701 of which the attribute "date and time" of the inning segment is obtained from the attribute "date and time" of the baseball game segment. Inference rules 702 and 703 define the relation between a particular inning segment and offending teams. When the attribute "distinguishment of first half or second half" of the inning segment is the first half, the inference rule 702 represents that the visitor team is offending. When the attribute "distinguishment of first half or second half" of the inning segment is the second half, the inference rule 703 represents that the home team is offending.

Fig. 8 shows an example of a meta information operation using inference rules. The user searches and/or browses meta information stored in the meta information storing portion 306 through the meta information operating portion 310. Fig. 8 shows the case that the user has input a command 801 for searching and/or browsing (reproducing) an inning segment of which the offending team is Hanshin.

When a scene search menu is selected, as shown in Fig. 9, a user interface screen 901 that shows attributes to be searched is displayed on a part of the displaying portion 313 or another displaying unit under the control of the memory information operating portion 310. When an inning segment of which Hanshin is offending is searched and reproduced, after an "inning" tab is selected, an attribute "offending" (icon) 903 and an attribute "Hanshin" (icon) 904 are successively selected by moving a cursor 902 and performing a clicking operation. Thereafter, a "SEARCH" button is pressed. In such a manner, a command 801 for searching and/or browsing (reproducing) an inning segment of which the offending team is Hanshin is input.

Since the visitor attribute of meta information is "Hanshin", an inference rule 702 causes an inferring process (pattern matching process) to be performed. This operation is referred to as unification. Thus, it is clear that as denoted by reference numeral 803, the value of variable @s is a baseball game segment represented by StreamID#1. Thus, an inferring process 804 is performed. Corresponding to the attribute "distinguishment of first half or second half" of the meta information 605, variable @inning becomes StreamID#100 as denoted by 805. Thus, it is determined that the result of the user's inquiry is "StreamID#100". The receiving terminal apparatus shown in Fig. 3 reproduces the inning segment 403 (StreamID#100) on the displaying portion 313. In this case, while the displaying portion 313 is reproducing particular contents data, its child screen may display the inning segment 403.

As another example of the searching operation using inference rules, an offending team name of the inning segment 403 (StreamID#100) may be searched. Since the attribute "distinguishment of first half or second half" of meta information 605 of the inning segment 403 is "first half", the unification is performed with the inference rule 702. Thus, it is clear that the value of variable @s is StreamID#1. In addition, as a result of the inferring process, it is clear that the offending team name is "Hanshin".

As was described above, an attribute value of meta information that is not explicitly represented can be processed using an inference rule. According to the embodiment of the present invention, using inference rules, the number of attributes of meta information can be reduced. Thus, the increase of data amount of meta information can be suppressed. As a result, the transmission efficiency can be improved. In other words, using inference rules, the minimally required amount of meta information is transmitted. The other required meta information is obtained using inference rules by the receiving terminal apparatus. Thus, the transmission efficiency can be improved.

Next, the embodiment of the present invention will be further described. The history of meta information searched by the meta information operating portion 310 is stored to the user profile storing portion 312. As a format of which the search history of meta information is stored to the user profile storing portion 312, an identifier of an inference rule applied in the meta information operation and the frequency thereof are stored as a pair.

Fig. 10 is a flow chart showing a process for storing a search history to the user profile storing portion 312. At step S1, it is determined whether or not a received inference rule has been stored to the inference rule storing portion 304. When the received inference rule has been stored to the inference rule storing portion 304, the flow advances to step S2. At step S2, the frequency Freq(i) of the rule applied for the inference rule number i stored in the user profile storing portion 312 is initialized (Freq(i) = 0). The inference rule number i is a number assigned to each inference rule.

The meta information operation performed by the user with the meta information operating portion 310, in reality, a meta information searching process, is shown in Fig. 11. At step S11, a meta information operation is performed. Thereafter, the flow advances to step S12. At step S12, it is determined whether or not an inference rule has been applied for a searching process as described with reference to Fig. 8. When an inference rule has not been applied, the flow returns to step S11.

When an inference rule has been applied, the frequency Freq(i) applied for the inference rule number i is incremented by +1 (at step S13). At step S14, it is determined whether or not the applied frequency Freq(i) is larger than a threshold value T. The threshold value T is a predetermined value. When the relation of (Freq(i) ≤ T) is satisfied, the flow returns to step S11. When the relation of (Freq(i) > T) is satisfied, the flow advances to step S15. At step S15, a meta information - schema changing process is performed.

Fig. 12 shows the meta information - schema changing process performed by the meta information / schema changing portion 308. At step S21, the user profile storing portion 312 informs the meta information / schema changing portion 308 that Freq(i) is larger than the threshold value T. Thus, the meta information / schema changing portion 308 appends the left side of an inference rule of which the applied frequency is larger than the threshold value to the meta information schema. The left side of an inference rule represents an item to be inferred. Thus, the left side of an inference rule is a new attribute of a particular information structure.

In the inference rule 701 shown in Fig. 7, "date and time" of an inning segment is defined as a left side. In the inference rules 702 and 703, offending teams (visitor team and home team) are defined as left sides of the inference rules. At step S21, the attribute is appended as a new attribute to the meta information schema. As an attribute is appended to the meta information schema, the attribute value of the meta information corresponding to the meta information schema is newly obtained (at step S22).

Next, an example of the meta information - schema changing process will be described with reference to Fig. 13. When it has been determined that the applied frequency Freq(i) of each of the inference rules 702 and 703 is larger than the threshold value T, a new attribute "offending: team name" is appended to the inning structure of the meta information schema (at step S21). Reference numeral 1301 represents the meta information schema to which the attribute has been appended. The meta information schema is stored to the meta information schema storing portion 306.

As a new attribute has been appended to the meta information schema, an attribute of "offending" is also appended to the meta information of the inning segment (StreamID#100) and the attribute value is obtained (at step S22). Reference numeral 1302 represents meta information that has been changed. An attribute of "offending" is also appended to meta information of the inning segment (StreamID#101) and the attribute value is obtained (at step S22). Reference numeral 1303 represents meta information that has been changed. The attribute value of the meta information is stored to the meta information storing portion 306.

After the changing process has been performed, whenever the searching process is performed, it is not necessary to apply the inference rules 702 and 703. Instead, the values of the attributes of "offending" can be directly obtained from the meta information 1302 and 1303. In the case that the applied frequencies of the inference rules 702 and 703 are high, when the attribute values are stored to the meta information storing portion 306, the searching efficiency can be improved.

In the above-described meta information schema - meta information changing process, the information stored in the meta information schema storing portion 307 and the meta information storing portion 306 is changed corresponding to the search history with the meta information operating portion 310. Alternatively, before information is stored to the meta information schema storing portion 307 and the meta information storing portion 306, the information may be changed.

Figs. 14 to 18 shows another example of the meta information schema - meta information changing process. As was described in the above example, the meta information schema - meta information changing process is not always executed when the applied frequency of an inference rule is larger than the threshold value. In the other example, a meta information schema and meta information are changed corresponding to a user's setup.

Fig. 14 shows examples of meta information schemas of a news program and a movie. The meta information schema of the news program has attributes that are for example an attribute "program name" and an attribute "announcer name". The meta information schema of the news program has attributes that are for example an attribute "title name" and an attribute "actor name". Fig. 15 shows examples of meta information created corresponding to the meta information schemas. In Fig. 15, attribute values of the attributes of the news program and the movie are shown.

Fig. 16 shows two inference rules 1601 and 1602. The inference rules 1601 and 1602 are inference rules for obtaining attributes "performer". In other words, the inference rule 1601 represents that the attribute "announcer" of the news is synonym with an attribute "performer". The inference rule 1602 represents that the attribute "actor" of the movie is synonymous with an attribute "performer".

It may be more preferred for a particular user to treat attributes "announcer" and "actor" as an attribute "performer" rather than distinguishing them. Thus, the user designates an attribute "performer" as a new attribute through the user profile operating portion 311.

As a result of which the user has designated a new attribute, the meta information schemas shown in Fig. 14 are changed to meta information schemas shown in Fig. 17. The attributes "announcer" and "actor" of the original meta information schemas are changed to the attributes "performer" of the new meta information schemas. The meta information schemas that have been changed are stored to the meta information schema storing portion 307.

In addition, the meta information shown in Fig. 15 is changed to meta information shown in Fig. 18. Although the meta information shown in Fig. 15 is received, when it is stored to the meta information storing portion 306, meta information converted as shown in Fig. 18 is stored. In other words, the attribute values of the attributs "announcer" and "actor" of the original meta information are changed to the attribute values of the attributes "performer".

Next, another embodiment (hereinafter referred to as second embodiment) of the present invention will be described. In the above-described embodiment (hereinafter referred to as first embodiment), the receiving terminal apparatus changes a meta information schema and meta information. On the other hand, according to the second embodiment of the present invention, with reference to information transmitted from a receiving terminal apparatus, the transmitting side (for example, a broadcasting station) changes a meta information schema and meta information. In the second embodiment, unlike with the first embodiment, a meta information schema and attributes of meta information that are transmitted can be prevented from being different front those of the receiving terminal apparatus.

Fig. 19 shows the structure of a broadcasting station 102 according to the second embodiment of the present invention. For simplicity, in Fig. 19, similar portions to those of the broadcasting station 102 of the first embodiment shown in Fig. 2 are denoted by similar reference numerals and their description is omitted. In the second embodiment, a communication controlling portion 210 receives meta information use histories from receiving terminal apparatuses 103a and 103b through a bidirectional network 105.

Corresponding to the received meta information use histories, a meta information changing portion 211, a meta information schema changing portion 212, and an inference rule changing portion 213 change information stored in a meta information storing portion 203, a meta information schema storing portion 202, and an inference rule generating - storing portion 201, respectively.

Fig. 20 shows the structure of the receiving terminal apparatus 103a (or 103b) according to the second embodiment of the present invention. For simplicity, in Fig. 20, the structural portions similar to those of the receiving terminal apparatus according to the first embodiment (see Fig. 3) are denoted by similar reference numerals and their description is omitted. In the second embodiment, the meta information / schema changing portion is not disposed. The history of the searching and/or browsing operation performed by a meta information operating portion 310 is stored to a user profile storing portion 312. The history of the searching and/or browsing operation is transmitted by a communication controlling portion 302 to a broadcasting station 102 as a transmitting apparatus through a bidirectional network 105.

In the second embodiment, as with the first embodiment, a meta information operation can be performed. For example, as shown in Fig. 5, a meta information schema is described and meta information corresponding thereto is described as shown in Fig. 6. The meta information operating portion 310 searches and/or browses meta information stored in a meta information storing portion 306. When meta information is searched, with inference rules shown in Fig. 7, attribute values of meta information that are not explicitly represented are obtained as new attribute values as shown in Fig. 8.

Next, the second embodiment of the present invention will be further described. The history of meta information searched by the meta information operating portion 310 is stored to the user profile storing portion 312. As a format of the search history stored to the user profile storing portion 312, an identifier of an inference rule applied for the meta information operation and the frequency thereof are stored as a pair.

Fig. 21 shows a process for storing the search history to the user profile storing portion 312. The process shown in Fig. 21 is the same as the process according to the first embodiment shown in Fig. 10. After a meta information schema and an inference rule (meta information schema number / inference rule number i) have been received, it is determined whether or not they have been stored to the meta information schema storing portion 307 and the inference rule storing portion 304, respectively (at step S31). When it has been determined they had been stored, the flow advances to step S32. At step S32, the frequency Freq(i) applied for a rule corresponding to the meta information schema number / inference rule number i stored in the user profile storing portion 312 is initialized (Freq(i) = 0). The meta information schema number / inference rule number i is a number assigned to each meta information schema / inference rule.

Fig. 22 shows a process for a meta information operation performed by the user with the meta information operating portion 310, in reality, a meta information searching process. When meta information is searched at step S41, an attribute of meta information having the structure corresponding to a particular meta information schema is searched. When an attribute of meta information has been searched, the applied frequency Freq(i) of the meta information schema number i corresponding to the attribute is incremented by +1 (at steps S42 and S43). When it has been determined that an attribute of meta information had not been referenced, the flow advances to step S44 skipping step S43.

At step S44, it is determined whether or not an inference rule has been applied as described with reference to Fig. 8. When an inference rule has been applied, the applied Freq(i) corresponding to the inference rule number i is incremented by +1 (at step S45). When an inference rule has not been applied, the flow advances to step S46 skipping step S45. At step S46, the meta information schema / inference rule applied frequency Freq(i) stored in the user profile storing portion 312 is transmitted as history information to a transmitting apparatus (broadcasting station). The communication controlling portion 302 transmits the history information periodically or corresponding to a request issued from the transmitting apparatus. When the amount of history information that has been stored exceeds a predetermined value, the communication controlling portion 302 automatically transmits the history information to the transmitting apparatus.

The transmitted history information is received by the communication controlling portion 210 of the transmitting apparatus (broadcasting station 120) through the bidirectional network 105. Corresponding to the received history information, a changing process for a meta information schema and an inference rule is performed. In other words, the meta information schema changing portion 212 deletes attributes whose applied frequencies are low from those of the meta information schema stored in the meta information schema storing portion 202 or prevents them from being added to transmission data. On the other hand, the meta information changing portion 211 deletes meta information corresponding to attributes that are deleted from those of meta information stored in the meta information storing portion 203 or meta information corresponding to attributes that are not added to the transmission data or prevents them from being added to the transmission data. As with a meta information schema, the inference rule changing portion 213 performs a deleting process or a transmission preventing process for inference rules whose applied frequencies are low in those stored in the inference rule generating and storing portion 201. Thus, it is not necessary to transmit unnecessary meta information and inference rules. Consequently, the transmission efficiency can be improved.

In addition, the inference rule changing portion 213 applies inference rules whose applied frequencies are high in those stored in the inference rule generating and storing portion 201 to a meta information schema so as to change the structure of the meta information schema. As the structure of the meta information schema is changed, the meta information is also changed.

Next, the above-described changing process will be further described with reference to Fig. 23. As a result of meta information searched by the user, if the frequency of which the attribute value of the attribute "distinguishment of first half or second half" is searched in those of the meta information schema is low, the attribute "distinguishment of first half or second half" is deleted from the meta information schema. Thus, the attribute "distinguishment of first half or second half" is not added as meta information. Since a meta information schema and meta information that have been not frequently used are not transmitted, the transmission efficiency can be improved. When the applied frequencies of the inference rules 702 and 703 are high, they are pre-applied. Thus, the attribute "offending" is added to the meta information schema. Instead, the inference rules 702 and 703 are deleted. Thus, the inference rules can be prevented from being unnecessary transmitted.

As a result, the meta information schema is changed to that as denoted by reference numeral 2301 shown in Fig. 23. After the changing process has been performed, meta information is added corresponding to the structure of the meta information schema 2301 that has been changed. For example, the meta information 1302 and 1303 shown in Fig. 13 are transmitted as meta information 2302 and 2303 shown in Fig. 23. In this case, it is not necessary to transmit the inference rules 702 and 703. Since unnecessary meta information and inference rules are not transmitted, when meta information is searched on the receiving side, it is not necessary to apply inference rules. Thus, the searching efficiency can be improved on the receiving side.

According to the second embodiment, the meta information changing portion 211, the meta information schema changing portion 212, and the inference rule changing portion 213 changes the meta information structure corresponding to the meta information use history received from a receiving terminal apparatus. As changed results of the individual changing portions, the contents stored in the inference rule storing portion 201, the meta information schema storing portion 202, and the meta information storing portion 203 are changed. As another method for performing the changing process, when the inference rule converting portion 205, the meta information schema converting portion 206, and the meta information converting portion 207 convert respective information into the transmission format, the individual information may be affected by the changed results.

When the meta information converting portion 207 has stored meta information in the data format shown in Fig. 15, if a use history that represents that the user has frequently used an attribute "performer" is obtained, as shown in Fig. 18, meta information is changed. The meta information storing portion 203 may be affected by the changed result. However, in this case, the information stored in the meta information storing portion 203 remains unchanged as shown in Fig. 15. Instead, the meta information converting portion 207 converts meta information into that as shown in Fig. 18. When the meta information storing portion 203 is affected by the changed result, the distinguishment of "announcer" and "actor" is lost. On the other hand, when the meta information converting portion 207 performs the converting process, the original information is not lost.

In the second embodiment of the present invention, the transmission of either meta information or inference rules may be omitted.

According to the present invention, since a transmitting apparatus receives a meta information use history from a receiving apparatus of a user and does not transmit meta information and inference rules that are not necessary for the receiving apparatus of the user, the transmission efficiency of meta information and inference rules can be improved on the transmitting apparatus side. On the other hand, since the transmitting apparatus transmits only necessary meta information and inference rules to the receiving apparatus, the searching efficiency of meta information can be improved on the receiving apparatus side.

According to the present invention, since the transmitting apparatus transmits inference rules that represent the relation of attributes of meta information schemas to each receiving terminal apparatus along with meta information schemas, when the user searches meta information, he or she can search more complex results with a small amount of data.

According to the present invention, using inference rules, the amount of data transmitted as meta information can be reduced. However, when the user searches meta information, since inference rules are applied, the searching efficiency may be lowered. On the other hand, according to the present invention, the applied frequencies of inference rules are obtained from a search history of the user and inference rules with high applied frequencies are applied to stored meta information. The applied meta information is stored. Thus, the searching efficiency can be improved. In addition, corresponding to a user's setup, the searching efficiency can be improved.

## Claims

1. A transmitting apparatus for providing digital contents, comprising:
meta information storing means for storing meta information about data that is transmitted;
meta information schema storing means for storing a meta information schema that defines the data structure of meta information about data that is transmitted;
inference rule storing means for storing an inference rule about the data structure of meta information about data that is transmitted; and
transmitting means for transmitting the meta information, the meta information schema, the inference rule, and contents data through a transmission path.

2. A transmitting apparatus for providing digital contents, comprising:
meta information storing means for storing meta information about data that is transmitted;
meta information schema storing means for storing a meta information schema that defines the data structure of meta information about data that is transmitted;
transmitting means for transmitting the meta information, the meta information schema, and contents data through a transmission path;
communication controlling means for communicating with a receiving apparatus; and
changing means for changing the structure of the meta information schema that has been stored in said meta information schema storing means and the meta information that has been stored in said meta information storing means corresponding to data that has been received through said communication controlling means.

3. A transmitting apparatus for providing digital contents, comprising:
meta information storing means for storing meta information about data that is transmitted;
meta information schema storing means for storing a meta information schema that defines the data structure of meta information about data that is transmitted;
inference rule storing means for storing an inference rule about the data structure of meta information about data that is transmitted;
transmitting means for transmitting the meta information, the inference rule, and contents data through a transmission path;
communication controlling means for communicating with a receiving apparatus; and
changing means for changing the inference rule that has been stored in said inference rule storing means corresponding to data that has been received through said communication controlling means.

4. The transmitting apparatus as set forth in claim 1, 2, or 3, further comprising:
converting means for converting the format of the meta information into a transmission format.

5. The transmitting apparatus as set forth in claim 2 or 3,
wherein data that has been received through said communication controlling apparatus is data that represents a use history of meta information of the receiving apparatus.

6. A receiving apparatus for receiving data for providing digital contents, comprising:
receiving means for receiving at least meta information and contents data through a transmission path;
meta information schema storing means for storing a meta information schema;
profile operating means for operating a selection criterion for selecting meta information corresponding to the meta information schema;
user profile storing means for storing a user profile generated by said profile operating means;
meta information filtering means for selecting and receiving meta information corresponding to the user profile;
meta information storing means for storing meta information that has been selected and received;
meta information operating means for searching and/or browsing meta information;
inference rule storing means for storing an inference rule about the data structure of meta information;
data storing means for receiving and storing data of contents represented by the meta information that has been selected; and
a data operating portion for operating data that has been stored in said data storing means.

7. A receiving apparatus for receiving data for providing digital contents data, comprising:
receiving means for receiving at least meta information and contents data through a transmission path;
meta information schema storing means for storing a meta information schema that defines the data structure of meta information;
profile operating means for operating a selection criterion for selecting meta information corresponding to the meta information schema;
user profile storing means for storing a user profile generated by said profile operating means;
meta information filtering means for selecting and receiving meta information corresponding to the user profile;
meta information storing means for storing meta information that has been selected and received;
meta information operating means for searching and/or browsing meta information;
inference rule storing means for storing an inference rule about the data structure of meta information;
changing means for changing the structure of the meta information schema that has been stored in said meta information schema storing means and the meta information that has been stored in said meta information storing means corresponding to the user profile that has been stored in said user profile storing means and to the inference rule that has been stored in said inference rule storing means;
data storing means for receiving and storing data of contents represented by the selected meta information; and
a data operating portion for operating data that has been stored in said data storing means.

8. The receiving apparatus as set forth in claim 7,
wherein said changing means changes the meta information schema that has been stored in said meta information schema storing means and the meta information that has been stored in said meta information storing means corresponding to a use history of meta information of a user.

9. The receiving apparatus as set forth in claim 7,
wherein said changing means changes a meta information schema and received meta information corresponding to a user's setup and stores the changed meta information schema and the changed meta information to said meta information schema storing means and said meta information storing means, respectively.

10. A transmitting and receiving apparatus having a transmitting apparatus for providing digital contents and a receiving apparatus for receiving digital contents,
wherein the transmitting apparatus comprises:
meta information storing means for storing meta information about data that is transmitted;
meta information schema storing means for storing a meta information schema that defines the data structure of meta information about data that is transmitted;
inference rule storing means for storing an inference rule about the data structure of meta information about data that is transmitted; and
transmitting means for transmitting the meta information, the meta information schema, the inference rule, and contents data through a transmission path, and
wherein the receiving apparatus comprises:
receiving means for receiving the meta information, the meta information schema, the inference rule, and contents data through a transmission path;
meta information schema storing means for storing the received meta information schema;
profile operating means for operating a selection criterion for selecting meta information corresponding to the meta information schema;
user profile storing means for storing a user profile generated by said profile operating means;
meta information filtering means for selecting and receiving meta information corresponding to the user profile;
meta information storing means for storing the meta information that has been selected and received;
meta information operating means for searching and/or browsing meta information;
inference rule storing means for storing an inference rule that has been received;
data storing means for receiving and storing data of contents that is represented by the selected meta information; and
a data operating portion for operating data that has been stored in said data storing means.

11. A transmitting and receiving apparatus having a transmitting apparatus for providing digital contents and a receiving apparatus for receiving digital contents,
wherein the transmitting apparatus comprises:
meta information storing means for storing meta information about data that is transmitted;
meta information schema storing means for storing a meta information schema that defines the data structure of meta information about data that is transmitted;
transmitting means for transmitting the meta information, the meta information schema, and contents data through a transmission path;
communication controlling means for communicating with the receiving apparatus; and
changing means for changing the structure of the meta information schema that has been stored in said meta information storing means and the meta information that has been stored in said meta information storing means corresponding to data that has been received through said communication controlling means, and
wherein the receiving apparatus comprises:
receiving means for receiving the meta information, the meta information schema, and contents data through a transmission path;
meta information schema storing means for storing the meta information schema that has been received;
profile operating means for operating a selection criterion for selecting meta information corresponding to the meta information schema;
user profile storing means for storing a user profile generated by said profile operating means;
meta information filtering means for selecting and receiving meta information corresponding to the user profile;
meta information storing means for storing meta information that has been selected and received;
meta information operating means for searching and/or browsing meta information;
data storing means for receiving and storing data of contents represented by the meta information that has been selected;
a data operating portion for operating data that has been stored in said data storing means; and
communication controlling means for transmitting data to the transmitting apparatus.

12. A transmitting and receiving apparatus having a transmitting apparatus for providing digital contents and a receiving apparatus for receiving digital contents,
wherein the transmitting apparatus comprises:
meta information storing means for storing meta information about data that is transmitted;
meta information storing means for storing a meta information schema that defines the data structure of meta information about data that is transmitted;
inference rule storing means for storing an inference rule about the data structure of meta information about data that is transmitted;
transmitting means for transmitting the meta information, the meta information schema, the inference rule, and contents data through a transmission path;
communication controlling means for communicating with the receiving apparatus; and
changing means for changing the inference rule that has been stored in said inference rule storing means corresponding to data that has been received through said communication controlling means, and
wherein the receiving apparatus comprises:
receiving means for receiving the meta information, the meta information schema, the inference rule, and contents data through a transmission path;
meta information schema storing means for storing the meta information schema that has been received;
profile operating means for operating a selection criterion for selecting meta information corresponding to the meta information schema;
user profile storing means for storing a user profile generated by said profile operating means;
meta information filtering means for selecting and receiving meta information corresponding to the user profile;
meta information storing means for storing the meta information that has been selected and received;
meta information operating means for searching and/or browsing meta information;
inference rule storing means for storing the inference rule that has been received;
data storing means for receiving and storing data of contents represented by the meta information that has been selected;
a data operating portion for operating data that has been stored in said data storing means; and
communication controlling means for transmitting data to the transmitting apparatus.

13. A transmitting and receiving apparatus having a transmitting apparatus for providing digital contents and a receiving apparatus for receiving digital contents,
wherein the transmitting apparatus comprises:
meta information storing means for storing meta information about data that is transmitted;
meta information schema storing means for storing a meta information schema that defines the data structure of meta information about data that is transmitted;
inference rule storing means for storing an inference rule about the data structure of meta information about data that is transmitted; and
transmitting means for transmitting the meta information, the meta information schema, the inference rule, and contents data through a transmission path, and
wherein the receiving apparatus comprises:
receiving means for receiving the meta information, the meta information schema, the inference rule, and contents data through a transmission path;
meta information schema storing means for storing the meta information schema that has been received;
profile operating means for operating a selection criterion for selecting meta information corresponding to the meta information schema;
user profile storing means for storing a user profile generated by said profile operating means;
meta information filtering means for selecting and receiving meta information corresponding to the user profile;
meta information storing means for storing the meta information that has been selected and received;
meta information operating means for searching and/or browsing meta information;
inference rule storing means for storing an inference rule;
changing means for changing the structure of the meta information schema that has been stored in said meta information schema storing means and the meta information that has been stored in said meta information storing means corresponding to the user profile that has been stored in said user profile storing means and to the inference rule that has been stored in said inference rule storing means;
data storing means for receiving and storing data of contents represented by the meta information that has been selected; and
a data operating portion for operating data stored in said data storing means.

14. A transmitting method for providing digital contents, comprising the step of:
when meta information about data that is transmitted, a meta information schema that defines the data structure of the meta information, and contents data are transmitted through a transmission path, changing the structure of the meta information schema and the meta information corresponding to data that has been received from a receiving apparatus and transmitting the changed data.

15. A transmitting method for providing digital contents, comprising the step of:
when meta information about data that is transmitted, a meta information schema that defines the data structure of the meta information, an inference rule about the data structure of the meta information, and contents data are transmitted through a transmission path, changing the inference rule corresponding to data that has been received from a receiving apparatus and transmitting the changed data.

16. The transmitting method as set forth in claim 14 or 15, further comprising the step of:
receiving a meta information use history from the receiving apparatus and transmitting a meta information schema, meta information, and an inference rule that have been changed so that they have respective data structures corresponding to the meta information use history.

17. A receiving method for receiving data for providing digital contents, comprising the steps of:
storing a meta information schema that defines the data structure of meta information;
storing meta information that has been selected and received;
searching and/or browsing meta information; and
changing the structure of the meta information schema and the meta information that has been stored corresponding to a user profile and an inference rule.

18. A transmitting and receiving method for providing digital contents and receiving digital contents, comprising the steps of:
transmitting meta information about data that is transmitted, a meta information schema that defines the data structure of the meta information, and contents data through a transmission path;
changing the structure of the meta information schema that is transmitted and the meta information corresponding to data that has been received from a receiving apparatus;
storing a meta information schema that defines the data structure of the meta information that has been received on a receiving side;
storing the meta information that has been selected and received; and
searching and/or browsing the meta information.

19. A transmitting and receiving method for providing digital contents and receiving digital contents, comprising the steps of:
transmitting meta information about data that is transmitted, a meta information schema that defines the data structure of the meta information, an inference rule, and contents data through a transmission path;
changing the inference rule that is transmitted corresponding to data that has been received from a receiving apparatus;
storing a meta information schema that defines the data structure of the meta information that has been received on a receiving side;
storing the meta information that has been selected and received; and
searching and/or browsing the meta information.

20. A transmitting and receiving method for providing digital contents and receiving digital contents, comprising the steps of:
transmitting meta information about data that is transmitted, a meta information schema that defines the data structure of the meta information, an inference rule about the data structure of the meta information, and contents data through a transmission path;
storing the meta information schema that defines the data structure of the meta information that has been received on a receiving side;
storing the meta information that has been selected and received; and
changing the structure of the meta information schema and the meta information that has been stored corresponding to a user profile and the inference rule.
